(19) Europäisches Patentamt / European Patent Office / Office européen des brevets

(11) **EP 3 081 096 B1**

(12) **EUROPEAN PATENT SPECIFICATION**

(45) Date of publication and mention
of the grant of the patent:
**19.12.2018 Bulletin 2018/51**

(21) Application number: **14804431.6**

(22) Date of filing: **08.04.2014**

(51) Int Cl.:
*A23K 50/42* (2016.01)   *A23K 40/25* (2016.01)
*A23K 10/30* (2016.01)

(86) International application number:
**PCT/JP2014/060187**

(87) International publication number:
**WO 2014/192426 (04.12.2014 Gazette 2014/49)**

(54) **PET FOOD**

HAUSTIERFUTTER

ALIMENT POUR ANIMAUX DE COMPAGNIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.12.2013 JP 2013257500**

(43) Date of publication of application:
**19.10.2016 Bulletin 2016/42**

(73) Proprietor: **Unicharm Corporation
Ehime 799-0111 (JP)**

(72) Inventors:
• **IKEDA, Go
Itami-shi
Hyogo 664-0831 (JP)**

• **YOSHIGA, Fumisato
Itami-shi
Hyogo 664-0831 (JP)**
• **YAMAMOTO, Junichi
Itami-shi
Hyogo 664-0831 (JP)**

(74) Representative: **Staeger & Sperling
Partnerschaftsgesellschaft mbB
Sonnenstraße 19
80331 München (DE)**

(56) References cited:
WO-A2-2013/138405    GB-A- 2 060 345
JP-A- H0 870 787     JP-A- 2001 008 640
JP-A- 2005 013 079    JP-A- 2005 538 715
JP-A- 2010 158 200    US-A- 4 190 679

## Description

Technical Field

The present invention relates to pet food. More specifically, the present invention relates to pet food with excellent palatability.
The scope of the invention is defined by the claims.
Priority is claimed on Japanese Patent Application No. 2013-257500, filed December 12, 2013.

Background Art

As pet food for mainly dogs or cats in the related art, so-called "dry food" having a water content of approximately 10% by weight or less has been produced and sold. Dry food obtained by mixing pellets (also referred to as "small pieces") having compositions or shapes different from each other has been widespread as such dry food.
In regard to the pet food of the related art obtained by mixing plural kinds of pellets or small pieces with each other, since there is not a great difference in taste or texture between plural kinds of pellets or small pieces, the overall taste thereof becomes monotonous and thus the palatability for pets could not be improved.
For example, PTL 1 discloses pet food obtained by mixing three or more kinds of small pieces with compositions of nutritional components which are different from each other so that there is a difference in the texture and taste between small pieces.

Citation List

Patent Literature

[PTL 1] Japanese Unexamined Patent Application, First Publication No. H08-70787
Further prior art in this technical field is disclosed in documents US 4,190,679 A, WO 2013/138405 A2 and GB 2 060 345 A.

Summary of Invention

Technical Problem

However, there is a tendency that the breeding rate of pets such as dogs or cats has been increasing in recent years. Therefore, due to this tendency, pet food is required to have further improved palatability.
The present invention has been made in consideration of the above-described problems and an object thereof is to provide pet food with excellent palatability.

Solution to Problem

The present inventors found that pet food with excellent texture and palatability can be obtained by a pet food containing granulated pellets in which the hardness or the thickness of the pellets are adjusted to be in a predetermined range, thereby completing the present invention.
In other words, the present invention is defined by the combination of the features of claim 1 as follows.
(1) Pet food comprising granulated pellets, the pet food comprising: primary puffed pellets (A); and auxiliary puffed pellets (B), wherein a difference in hardness between the primary puffed pellets (A) and the auxiliary puffed pellets (B) being 5 N or more, wherein the hardness of the auxiliary puffed pellets (B) is less than the hardness of the primary puffed pellets (A), wherein the water contents of the primary puffed pellets (A) and the auxiliary puffed pellets (B) are 10% by weight or less, wherein the auxiliary puffed pellets (B) contain 65% by weight or more of at least one member selected from the group consisting of wheat flour and bread crumbs as raw ingredients, wherein the primary puffed pellets (A) contains 18% by weight or more of crude protein and 5% by weight to 15% by weight of crude fat, and wherein the content of the primary puffed pellets (A) is 70% by weight or more and less than 100% by weight.

(2) The pet food according to (1), in which a difference in the thickness between the primary puffed pellets (A) and the auxiliary puffed pellets (B) is 0.5 mm or more.

(3) The pet food according to any one of (1) to (2), in which a difference in the water content between the primary puffed pellets (A) and the auxiliary puffed pellets (B) is less than 4.0% by weight.

(4) The pet food according to any one of (1) to (3) further containing non-puffed pellets.

(5) The pet food according to any one of (1) to (4) which is a feed for dogs.

Advantageous Effects of Invention

According to the present invention, it is possible to provide pet food with excellent palatability.

Brief Description of Drawings

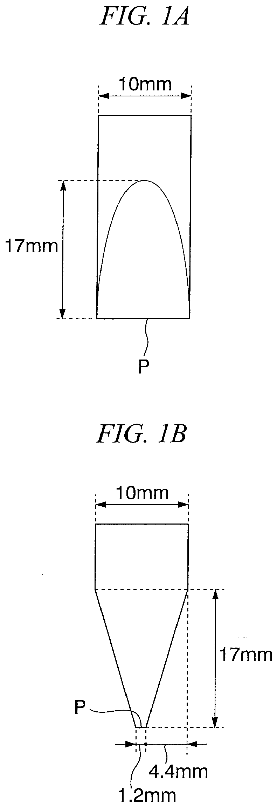

FIG. 1A is a front view illustrating a V-type plunger which can be used at the time of measuring the hardness of pet food of the present invention.
FIG. 1B is a side view illustrating a V-type plunger which can be used at the time of measuring the hardness of pet food of the present invention.

Description of Embodiments

The "palatability" of pet food in the present invention is an index of whether the pet food is preferred and eaten by pets and is determined by the texture and/or the taste thereof. For example, the palatability of the pet food may be determined by one or both of the texture and the taste.
The present invention relates to pet food, which is formed of a combination of formed pellets, containing primary puffed pellets (A) and auxiliary puffed pellets (B), in which a difference in hardness between the primary puffed pellets (A) and the auxiliary puffed pellets (B) is 5 N or more.

<<Primary puffed pellets (A)>>

The pet food of the present invention contains primary puffed pellets (A).
In the present invention, the "primary puffed pellets" are food pellets which are nutritionally well-balanced, capable of healthily breeding pets, and produced by being puffed.
The primary puffed pellets (A) are not particularly limited, and pellets that are formed by mixing various known raw ingredients for pet food of the related art and are extrusion-formed using an extruder or the like may be employed as the primary puffed pellets (A).
As the raw ingredients of the primary puffed pellets (A), raw ingredients which are typically used to produce pet food can be applied. In the present invention, examples thereof may include cereals such as corn, wheat flour, bread crumbs, barley, brown rice, rice flour, oats, corn flour, oatmeal, and beans; and meats such as chicken, beef, pork, fish, and venison (so-called "meals" which are powder products obtained by compressing and finely pulverizing meats may be used). As important nutrients contained in meats and cereals, protein and carbohydrates are exemplified. As the carbohydrates, carbohydrates derived from a processed product such as processed starch can be exemplified. Since these cereals may contain protein, ash, minerals, vitamins, and the like in addition to carbohydrates, the cereals can be used as a nutrient source.
Moreover, beet pulp or cheese may be used.
As the raw ingredients of primary puffed pellets (A), palatability improvers, for example, extracts such as vitamins and minerals, animal oils and fats, vegetable protein such as corn gluten meal, and animal protein may be added to the above-described mixture in addition to the protein and carbohydrates described above, and additives such as perfumes, seasonings, colorants, emulsifying agents, pH adjusting agents, leavening agents, and antioxidants may be blended with the mixture as needed. Further, a humectant such as sorbitol or glycerin may be used.
The primary puffed pellets (A) can be obtained by the following method.
First, raw ingredients of the primary puffed pellets (A) are obtained by mixing with each other at a desired blending ratio. As the method of obtaining the mixture, a known method of mixing and pulverizing raw ingredients at the same time using a grinder or the like can be applied. For example, a method described in "Small Animal Clinical Nutrition 4th Edition" (edited by Michael S. Hand, Craig D. Thatcher, Rebecca L. Remillard, Philip Roudebusg, published by Mark Morris Associates, 2000, pp. 157 to 190) can be applied.
In the present invention, the primary puffed pellets (A) are granulated by puffing the mixture. The term "puffing" means that the volume is increased by gas being generated in a system by means of heating, fermentation, a chemical reaction, or a reduction in pressure and incorporating the gas in the inside thereof.

Moreover, the term "granulating" means forming pet food into a shape which is suitable for a pet to eat.

During the puffing, it is preferable that a known extruder (extruder) is applied. After the mixture is pressed using an extruder, the mixture is released to the air at the same time with the forming such that the pressure is drastically reduced, water vapor in the mixture is expanded, and bubbles can be contained in the pellets. In a case where an extruder is used, the mixture may be heated or water may be added to the mixture as needed.

In the present embodiment, the shape of food pellets of the primary puffed pellets (A) to be formed is not particularly limited as long as the shape is suitable for a pet to eat and any kind of shape such as a spherical shape, a polygonal shape, a cylindrical shape, a donut shape, a plate shape, a go stone shape (circular, curved tablet), a heart shape, a star shape, a fish shape, or a wheel shape can be used. Further, in regard to the size of food pellets to be formed, the food pellets may be small such that a pet can cram all into the mouth or may be large such that a pet can bite into the food plural times.

The size and the shape of the food pellets are not particularly limited. In regard to the size, the shortest diameter and the longest diameter thereof are both preferably in a range of 3 mm to 30 mm, more preferably in a range of 6 mm to 16.5 mm, and still more preferably in a range of 8 mm to 12 mm. In regard to the shape, a go stone shape whose shortest diameter and longest diameter are both in the range of 3 mm to 30 mm is preferable, a go stone shape whose shortest diameter and longest diameter are both in the range of 6 mm to 16.5 mm is more preferable, and a go stone shape whose shortest diameter and longest diameter are both in the range of 8 mm to 12 mm is still more preferable.

In the present invention, the crude protein content in the primary puffed pellets (A) is 18% by weight or more and the crude fat content therein is in in a range of 5% by weight to 15% by weight, more preferable that the crude protein content in the primary puffed pellets (A) is 21% by weight or more and the crude fat content therein is in in a range of 7% by weight to 14% by weight, and still more preferable that the crude protein content in the primary puffed pellets (A) is 23 % by weight or more and the crude fat content therein is in in a range of 7% by weight to 14% by weight.

When the composition is set to be in the above-described range, pet food with sufficient nutrients can be obtained. Further, since the texture of the pet food can be made different by mixing auxiliary puffed pellets (B) having different cereal raw ingredients as described below, it is possible to obtain pet food with excellent palatability and different texture.

In the present invention, the water content, the crude protein content, the crude fat content, the crude fiber content, and the crude ash content can be acquired according to the following methods. At this time, the pet food is pulverized before each measurement using a pulverizer so as to pass through a sieve having a mesh of 1 mm, and the resultant may be used as an analytical sample.

Moreover, the crude protein content, the crude fat content, the crude fiber content, and the crude ash content are values showing real numbers at the time of analyzing nutritional components and are also numerical values including substances other than respective pure components.

For the crude protein content, amino acid and aminos are also measured at the same time in addition to pure protein.

For the crude fat content, vitamins or other components dissolved in fat are also measured in addition to the fat.

For the crude fiber content, keratin or the like is also measured because insoluble residues are measured through boiling using an acid and an alkali.

Since the crude ash content is obtained by measuring a portion which has become ashes through burning, minerals and oxides thereof are included in crude ash.

<<Water content>>

2 g to 5 g of the analytical sample is accurately weighed, put into an aluminum weighing dish (after the sample is dried in advance, the weight thereof is accurately weighed), dried at a temperature of 135 ± 2°C for 2 hours, and left to be cooled in a desiccator. Next, the weight thereof is accurately weighed, and then the water content is acquired from a difference between the weights weighed before and after the drying.

<<Crude protein content>>

(1) Preparation of reagent:

(a) N/10 sodium hydroxide standard solution: A saturate solution of sodium hydroxide (special grade) is prepared, sealed, and allowed to stand for 10 days or longer. Distilled water is added to 50 mL of the supernatant thereof until the amount of the solution becomes 10 L, a N/10 sodium hydroxide standard solution is prepared, and then the concentration thereof is standardized. 2 g to 2.5 g of sulfamic acid (standard reagent) [dried in a desiccator (under reduced pressure) for 48 hours] is accurately weighed, put into a 250 mL measuring flask, and is melted by adding distilled water to the flask, and distilled water is added up to the marked line of the flask, thereby preparing a sulfamic acid standard solution. 25 mL of the solution is accurately weighed and put into a 200 mL three-necked flask, few drops of a bromothymol blue reagent are added thereto, and the solution is titrated with the N/10 sodium hydroxide standard solution. In this manner, the coefficient of the N/10 sodium hydroxide standard solution is calculated using the following Equation (1).

$$\text{Coefficient (f1) of N/10 sodium hydroxide standard solution} = (W \times 104)/(V \times 97.10) \cdots (1)$$

W = weight (g) of sulfamic acid in sulfamic acid standard solution (25 mL) used for standardization
V = amount (mL) of N/10 sodium hydroxide standard solution required for titration

(b) N/10 sulfuric acid standard solution: 28 mL of sulfuric acid (special grade) is added to 1 L of distilled water while the solution is stirred, the solution is left to be cooled, distilled water is added thereto until the amount of the solution becomes 10 L, a N/10 sulfuric acid standard solution is prepared, and then the concentration thereof is standardized. 25 mL of the N/10 sulfuric acid standard solution is accurately weighed and put into a 200 mL three-necked flask, few drops of a methyl red reagent are added thereto, and the solution is titrated with the N/10 sodium hydroxide standard solution. In this manner, the coefficient of the N/10 sulfuric acid standard solution is calculated using the following Equation (2).

$$\text{Coefficient (f2) of N/10 sulfuric acid standard solution} = (V \times f1)/25 \cdots (2)$$

f1 = coefficient of N/10 sodium hydroxide standard solution
V = amount (mL) of N/10 sodium hydroxide standard solution required for titration

(2) Preparation of sample solution: 1 g to 5 g of the analytical sample is accurately weighed and put into a Kjeldahl flask, 9 g of potassium sulfate (special grade) and 1 g of copper sulfate (special grade) are added thereto, 30 mL to 40 mL of sulfuric acid (special grade) is added thereto, the solution is shaken to be mixed, gradually heated, ignited after bubbles are no longer generated, and then heated for 2 hours or longer after the content solution becomes transparent, there by obtaining a sample solution.

(3) Quantification: The total amount of the sample solution or a certain amount of a solution obtained by accurately diluting the sample solution with distilled water to 250 mL is accurately weighed and put into a Kjeldahl flask, an appropriate amount of distilled water is added thereto, a sodium hydroxide (special grade) solution (50 w/v%) with an amount sufficient to make the solution strong alkaline is also added thereto, the obtained solution is linked to a steam distillation device to which a receiver, into which a certain amount of N/10 sulfuric acid standard solution is accurately weighed and then put in advance, is connected, and then the solution is distilled to approximately 120 mL. Few drops of a methyl red reagent are added to the distillate, and the distillate is titrated with the N/10 sodium hydroxide standard solution. In this manner, the amount of nitrogen [N] is calculated using the following Equation (3), and the crude protein content obtained by multiplying the amount of nitrogen by 6.25 is acquired.

$$\text{Amount of nitrogen [N] (\%)} = 1.40 \times f1 \times (V1 - V2) \times (250/V) \times (100/W) \times 10^{-3} \cdots (3)$$

f1 = coefficient of N/10 sodium hydroxide standard solution
V1 = amount (mL) of N/10 sodium hydroxide standard solution corresponding to amount of N/10 sulfuric acid standard solution which is put into receiver
V2 = amount (mL) of N/10 sodium hydroxide standard solution required for titration
V = amount (mL) of sample solution used for distillation
W = weight (g) of sample used for analysis

<<Crude fat content>>

2 g of the analytical sample is accurately weighed and put into a 100 mL beaker, 2 mL of ethanol (special grade) is added thereto, the solution is mixed with a glass rod, the sample is moisturized, 20 mL of hydrochloric acid (special grade) (a solution obtained by diluting 4 volumes thereof with 1 volume of distilled water) is added thereto, the beaker is covered with a watch glass, and the solution is occasionally stirred in a water bath at a temperature of 70°C to 80°C and heated for 1 hour at the same time and then left to be cooled. The contents in the beaker are put in 200 mL of a separatory funnel, the container is sequentially washed with 10 mL of ethanol (special grade) and 25 mL of diethyl ether (special grade), a washing liquid is put together in the prepared separatory funnel, and 75 mL of diethyl ether (special grade) is added thereto and strongly shaken to be mixed. After the separatory funnel is allowed to stand still, a diethyl ether layer is filtered using a funnel filled with cotton wool, and the resultant is put into a fat weighing bottle (the resultant is dried in a temperature range of 95°C to 100°C in advance and left to be cooled in a desiccator, and then the weight thereof is accurately weighed). 50 mL of diethyl ether (special grade) is added to the residual liquid, the same operation is performed twice, and the respective diethyl ether layers are put together in the prepared fat weighing bottle. The diethyl ether in the fat weighing bottle is recovered using Soxhlet extractor, the remaining diethyl ether is volatilized, dried in a temperature range of 95°C to 100°C for 3 hours, and left to be cooled in a desiccator, and the weight thereof is accurately weighed. In this manner, the crude fat content is calculated using the following Equation (4).

$$\text{Crude fat content (\%) in sample} = \{(W1 - W2)/W\} \times 100 \cdots (4)$$

W1 = weight of fat weighing bottle + weight (g) of extract
W2 = weight (g) of fat weighing bottle
W = weight (g) of sample used for analysis

<<Crude fiber content>>

2 g to 5 g of the analytical sample is exactly weighed and put into a 500 mL tall beaker, 50 mL of sulfuric acid (special grade) (a solution obtained by diluting 1 volume thereof with 34 volumes of distilled water) is added thereto, distilled water is further added thereto until the total amount thereof becomes 200 mL, the tall beaker is covered with a watch glass and boiled for 30 minutes while compensating evaporating water, and the contents therein are filtered using a stainless steel wire net having a length of 0.044 mm and washed with hot distilled water. An acid insoluble matter is transferred to the prepared tall beaker using 130 mL to 140 mL of distilled water, 50 mL of a sodium hydroxide (special grade) solution (5 w/v%) is added thereto, distilled water is further added thereto until the total amount thereof becomes 200 mL, the tall beaker is covered with a watch glass and boiled for 30 minutes while compensating evaporating water, and the contents therein are filtered using a stainless steel wire net having a length of 0.044 mm and washed with hot distilled water. This acid and alkali insoluble matter is filtered using filter paper (No. 5A) (the insoluble matter is put into an aluminum weighing dish in advance, dried at 135 ± 2°C for 2 hours, and left to be cooled in a desiccator, and the weight thereof is accurately weighed), the resultant is washed with hot distilled water until the alkaline reaction of the filtrate is eliminated, sequentially washed with a small amount of ethanol (special grade) and a small amount of diethyl ether (special grade) respectively two times or three times, and then air-dried for 3 hours to 4 hours.
Next, the acid and alkali insoluble matter is transferred to the prepared aluminum weighing dish together with filter paper, dried at 135 ± 2°C for 2 hours, and left to be cooled in a desiccator, and the weight thereof is accurately weighed, and then the amount of the acid and alkali insoluble matter is acquired. The contents in the aluminum weighing dish are transferred to a crucible (the contents therein are heated in a temperature range of 550°C to 600°C for 2 hours in advance and left to be cooled in a desiccator, and the weight thereof is accurately weighed), gently heated and carbonized, further heated in a temperature range of 550°C to 600°C for 2 hours to be ashed, and left to be cooled in a desiccator, and the weight thereof is accurately weighed. In this manner, the crude ash content is acquired and the crude fiber content in the sample is calculated using the following Equation (5).

$$\text{Crude fiber content (\%) in sample} = \{(W1 - W2)/W\} \times 100 \cdots (5)$$

W1 = weight (g) of acid and alkali insoluble matter
W2 = weight (g) of crude ash in acid and alkali insoluble matter
W = weight (g) of sample used for analysis

<<Crude ash content>>

2 g to 5 g of the analytical sample is exactly weighed and put into a crucible (the sample is heated in a temperature range of 550°C to 600°C for 2 hours in advance and left to be cooled in a desiccator, and the weight thereof is accurately weighed), gently heated and carbonized, further heated in a temperature range of 550°C to 600°C for 2 hours to be ashed, and left to be cooled in a desiccator, and the weight thereof is accurately weighed. In this manner, the crude ash content is acquired.

<<Auxiliary puffed pellets (B)>>

The pet food of the present invention contains the auxiliary puffed pellets (B).
In the present invention, the auxiliary puffed pellets indicate food pellets specialized in palatability and produced by being puffed.
The auxiliary puffed pellets (B) of the present invention are not particularly limited as long as the food pellets are specialized in palatability, and the auxiliary puffed pellets (B) contain 65% by weight or more of wheat flour and/or bread crumbs as raw ingredients, more preferable that the auxiliary puffed pellets (B) contain 75% by weight or more of wheat flour and/or bread crumbs as raw ingredients, and still more preferable that the auxiliary puffed pellets (B) contain 85% by weight or more of wheat flour and/or bread crumbs as raw ingredients. For example, the auxiliary puffed pellets (B) may contain 65% by weight or more of one of wheat flour and bread crumbs or may contain 65% by weight or more of both of wheat flour and bread crumbs.
It is preferable that the auxiliary puffed pellets (B) further include a palatability improver. The palatability improver is not particularly limited, and an agent of the related art which has been used may be employed. Specifically, extracts from meat and seafood may be exemplified.
Moreover, the auxiliary puffed pellets (B) may contain an additive exemplified in the section of the primary puffed pellets (A) described above.
In addition, the auxiliary puffed pellets (B) can be obtained by the same method as that for the primary puffed pellets (A).
In the present invention, the auxiliary puffed pellets (B) are granulated by being puffed according to the same method as that for the primary puffed pellets (A).
In the present invention, in regard to the shape of the food pellets of the auxiliary puffed pellets (B) to be formed, the shortest diameter and the longest diameter thereof are both preferably in a range of 6 mm to 16.5 mm and more preferably in a range of 8 mm to 14 mm.
In the present invention, when the auxiliary puffed pellets (B) contain wheat flour and/or bread crumbs at a content of 65% by weight or more, the pellets are easily puffed so that the auxiliary puffed pellets can have a large amount of bubbles, and thus predetermined hardness described below can be achieved. For this reason, it is considered that the auxiliary puffed pellets (B) are easily cracked compared to the primary puffed pellets (A) and light texture can be obtained.
In the present invention, the crude ash content of the auxiliary puffed pellets (B) is preferably 5.0% by weight or less, more preferably in a range of 3.0% by weight to 5.0% by weight, and particularly preferably in a range of 3.0% by weight to 4.5% by weight.
When the crude ash content is set to be above-described range, the off-flavor of the auxiliary puffed pellets (b) can be reduced and the flavor of the palatability improver is brought out. For this reason, it is considered that pet food with excellent taste and palatability can be obtained.
In the present invention, a difference in hardness between the primary puffed pellets (A) and the auxiliary puffed pellets (B) is 5 N or more.
In the present invention, a difference in hardness between the primary puffed pellets (A) and the auxiliary puffed pellets (B) is 5 N or more, preferably 25 N or more, more preferably in a range of 10 N to 20 N, and most preferably in a range of 12 N to 15 N.
Moreover, the hardness of the primary puffed pellets (A) and the auxiliary puffed pellets (B) is obtained by measuring the hardness of each of approximately 10 to 20 pellets and the obtained average value is set as the "hardness" thereof.
In the present invention, the hardness of the primary puffed pellets (A) and the auxiliary puffed pellets (B) can be obtained by the following method.

<<Measurement of hardness>>

<Physical property measuring device>

Manufacturing company: Takemoto Denki Corporation
Electrical device: TEXTUROMETER (model No: GTX-2)

<Measurement conditions>

Plunger: plunger (chromium V type) illustrated in FIG. 1A and FIG. 1B, a contact surface P in which the plunger is brought into contact with the pet food is a V-type (wedge-shape)
Platform: flat dish clearance
(Most compression point): bitten up to 80% of the thickness of a portion to be measured
Output: 1 V
BITE SPEED: LOW (6 times/min)
Pet food is placed on the flat dish, and the plunger is pressed into the pet food from the upper portion so that a load is applied thereto. At this time, it is set that up to 80% (clearance) of the thickness of the portion to be measured in the pet food is bitten.

The hardness indicates the maximum test force at the time when a load is applied to the pet food using a plunger. The unit thereof is a newton (N). The hardness indicates the physical hardness of the pet food.

In the present specification, the unit of the numerical value of the hardness is converted into N by multiplying the numerical value of the hardness (kgw) acquired from the chewing waveform measured using the TEXTUROMETER (model No: GTX-2) by 9.8.

In the present embodiment, the hardness can be acquired based on the chewing waveform obtained by performing measurement under the same conditions as the above-described measurement conditions or compatible conditions in a case where a physical property measuring device (texturometer) other than that described above is used. In the present invention, a method of acquiring the hardness is in conformity with a texture profile of Szczesniak (Szczesniak, A. S.: J. Food Sci., 28, 385 (1963)). Szczesniak organized and systematized the terminology related to the texture in General Foods Corporation in the United States and showed a correlation between measured values using the texturometer and functional evaluation values of a person (Szczesniak, A. S., Blandt, M. A. & Freidman, H. H. : J. Food Sci., 28, 397 (1963)).

In the present invention, a difference in thickness between the primary puffed pellets (A) and the auxiliary puffed pellets (B) is preferably 0.5 mm or more, more preferably 1.0 or more, and even more preferably 1.5 mm or more. In the present invention, the thickness of the primary puffed pellets (A) and the auxiliary puffed pellets (B) may be measured using a vernier caliper or the like.

As a method of measuring the thickness thereof, a portion in which the thickness of food pellets placed on a horizontal table is the greatest when seen from the above may be measured in a case where the shape of the food pellets is a go stone shape.

In a case where the shape of food is a rectangular parallelepiped shape, a portion in which the thickness of the food pellets placed on a horizontal table is the smallest when seen from the above may be measured as the thickness. Further, in a case where the shape of food is cylindrical, the smallest length from among the diameter, the major axis, the minor axis, and the height of the bottom when the food pellets placed on the horizontal table are seen from the above may be measured.

In the present invention, when a difference in hardness between the primary puffed pellets (A) and the auxiliary puffed pellets (B) is in the above-described range and a difference in thickness between the primary puffed pellets (A) and the auxiliary puffed pellets (B) is 0.5 mm or more, it is possible to make a significant difference in texture between the primary puffed pellets (A) and the auxiliary puffed pellets (B). Therefore, the palatability of the pet food can be further improved. Here, a difference in thickness between the primary puffed pellets (A) and the auxiliary puffed pellets (B) may be 0.5 mm or more. In addition, either of the primary puffed pellets (A) and the auxiliary puffed pellets (B) may be thicker than the other, but it is preferable that the thickness of the auxiliary puffed pellets (B) is more than the thickness of the primary puffed pellets (A).

Moreover, in the present invention, the hardness of the auxiliary puffed pellets (B) is less than the hardness of the primary puffed pellets (A). When the hardness of the auxiliary puffed pellets (B) is set to be less than the hardness of the primary puffed pellets (A), it is possible to obtain pet food with improved texture and excellent palatability. Specifically, it is preferable that the difference in hardness between the primary puffed pellets (A) and the auxiliary puffed pellets (B) is set to be in the above-described range.

In the present invention, the water contents of the primary puffed pellets (A) and the auxiliary puffed pellets (B) are respectively preferably in a range of 5% by weight to 10% by weight, more preferably in a range of 6% by weight to 9.5% by weight, and still more preferably in a range of 7% by weight to 9% by weight. The method of measuring the water content is as described above. In addition, the "water content" in the present invention indicates % by weight with respect to the total weight of the food pellets.

The pellets having a water content of 10% by weight or less are so-called "dry food." In the present invention, it is preferable that the pet food is dry food.

In the present invention, a difference in the water content between the primary puffed pellets (A) and the auxiliary puffed pellets (B) is preferably less than 4.0% by weight, more preferably 3% by weight or less, and still more preferably 2% by weight or less. When the difference in the water content therebetween is set to be in the above-described range, it is possible to prevent migration of water between the primary puffed pellets (A) and the auxiliary puffed pellets (B) and to prevent pellets from being wet or sodden. Here, the water content of either of the primary puffed pellets (A) and the auxiliary puffed pellets (B) may be more than the other, but it is preferable that the water content of the primary puffed pellets (A) is more than the water content of the auxiliary puffed pellets (B).

The pet food of the present invention contains the primary puffed pellets (A) and the auxiliary puffed pellets (B), and the mixing ratio of the primary puffed pellets (A) is 70% by weight or more and preferably less than 100% by weight with respect to 100% by weight of the pet food (with respect to the total weight of the food pellets). The mixing ratio of the primary puffed pellets (A) is preferably in a range of 75% by weight to 90% by weight and more preferably in a range of 79% by weight to 85% by weight. When the primary puffed pellets (A) containing a large amount of nutritional components are contained in the above-described range, it is possible to mix the auxiliary puffed pellets (B) with excellent palatability and to obtain pet food with a sufficient amount of ingestible nutrients.

Further, in the present invention, non-puffed pellets such as dried sardines, a dried product of small fish, a dried product of whitebaits, or thin shavings of dried bonito may be blended with the puffed pellets. When non-puffed pellets are contained, it is possible to provide features on appearance and to provide satisfaction for a breeder that gives pet food.

In the present specification and claims, the term "pets" indicate animals that have been bred by people. In a narrower sense, pets are animals being cared for by their owners. Further, the term "pet food" indicates feed for pets. The pet food of the present invention can be sold as "animal feed" or "animal food."

It is preferable that the pet food of the present invention is food for dogs.

In order to inform a pet owner that the pet food of the invention is suitable for a dog, when the pet food of the present invention is packaged and sold, it is possible to sell the product in a state in which an instruction that the pet food is suitable for a dog is displayed on the package.

Examples

Hereinafter, the present invention will be described in more detail with reference to examples described below, but the present invention is not limited to the following examples.

Further, in the following examples, the water content, the crude protein content, the crude fat content, the crude fiber content, and the crude ash content were acquired by the methods described above. At this time, the pet food was pulverized before each measurement using a pulverizer so as to pass through a sieve having a mesh of 1 mm, and the resultant was used as an analytical sample.

[Production Example]

<Production of puffed pellets: primary puffed pellets (a), primary puffed pellets (a1), primary puffed pellets (a2), auxiliary puffed pellets (b), and auxiliary puffed pellets (b1)>

Raw ingredients listed in Table 1 were mixed with each other at blending ratios listed in Table 1 and pulverized using a mixer, thereby obtaining a mixture of raw ingredients.

The obtained mixture was granulated by puffing the food pellets in a circular tablet shape using an extruder such that the primary puffed pellets had a diameter of 8 mm and a height (thickness) of 4 mm and the auxiliary puffed pellets had a diameter of 8 mm and a height of 6 mm. At this time, the food pellets were subjected to a heat treatment in a temperature range of 80°C to 100°C for 4 minutes and starch components were gelatinized.

The obtained food pellets were subjected to a drying treatment using a drier at approximately 100°C for approximately 20 minutes, thereby obtaining primary puffed pellets (a), primary puffed pellets (a1), primary puffed pellets (a2), auxiliary puffed pellets (b), and auxiliary puffed pellets (b1). The water contents, the crude protein contents, the crude fat contents, the crude fiber contents, and the crude ash contents of the obtained primary puffed pellets (a), primary puffed pellets (a1), primary puffed pellets (a2), auxiliary puffed pellets (b), and auxiliary puffed pellets (b1) were respectively measured by the above-described methods, and the results were as shown in the following Table 1.

<Production of square-cut pellets>

The raw ingredients listed in Table 1 were mixed with each other at mixing ratios listed in Table 1 and pulverized using a mixer, thereby obtaining a mixture of raw ingredients. Next, a die-cutting process was performed on the mixture to obtain a mixture processed to have a sheet shape with a thickness of 6 mm. Through the sheet forming according to a conventional method, square-cut pellets were obtained.

The water content, the crude protein content, the crude fat content, the crude fiber content, and the crude ash content of the obtained square-cut pellets were measured by the above-described methods, and the results were as shown in the following Table 1.

[Example 1]

The primary puffed pellets (a) and the auxiliary puffed pellets (b) obtained in the production example were mixed with each other such that the weight ratio of the primary puffed pellets (a) to the auxiliary puffed pellets (b) became 80:20, thereby obtaining dog food of Example 1.

[Example 2]

The primary puffed pellets (a), the auxiliary puffed pellets (b), and the square-cut pellets obtained in the production example and small fish were mixed with each other such that the weight ratio of the primary puffed pellets (a), the auxiliary puffed pellets (b), the square-cut pellets, and the small fish became 79:15: 5:1, thereby obtaining dog food of Example 2.

[Example 3]

The primary puffed pellets (a) and the auxiliary puffed pellets (b1) obtained in the production example were mixed with each other such that the weight ratio of the primary puffed pellets (a) to the auxiliary puffed pellets (b1) became 80:20, thereby obtaining dog food of Example 3.

[Example 4]

The primary puffed pellets (a1) and the auxiliary puffed pellets (b) obtained in the production example were mixed with each other such that the weight ratio of the primary puffed pellets (a1) to the auxiliary puffed pellets (b) became 80:20, thereby obtaining dog food of Example 4.

[Comparative Example 1]

Dog food containing 100% by weight of the primary puffed pellets (a) obtained in the production example was set as the dog food of Comparative Example 1.

[Comparative Example 2]

The primary puffed pellets (a2) and the square-cut pellets obtained in the production example were mixed with each other such that the weight ratio of the primary puffed pellets (a2) to the square-cut pellets became 80:20, thereby obtaining dog food of Comparative Example 2.

[Comparative Example 3]

Commercially available dry food for dogs formed by mixing two kinds of pellets was set as the dog food of Comparative Example 3.

The hardnesses of the primary puffed pellets (a), the primary puffed pellets (a1), the primary puffed pellets (a2), the auxiliary puffed pellets (b), the auxiliary puffed pellets (b1), and the square-cut pellets were measured by the above-described methods. The results thereof are shown in Table 2.

[Table 1]

| | Example 1 | | Example 2 | | | Example 3 | | Example 4 | | Comparative Example 1 | Comparative Example 2 | |
|---|---|---|---|---|---|---|---|---|---|---|---|---|
| | Primary puffed pellets (a) | Auxiliary puffed pellets (b) | Primary puffed pellets (a) | Auxiliary puffed pellets (b) | Square-cut pellets | Primary puffed pellets (a) | Auxiliary puffed pellets (b1) | Primary puffed pellets (a1) | Auxiliary puffed pellets (b) | Primary puffed pellets (a) | Primary puffed pellets (a2) | Square-cut pellets |
| Analysis of components (%) | | | | | | | | | | | | |
| Water content | 8.4 | 7.1 | 8.4 | 7.1 | 13.0 | 8.4 | | | | 8.4 | 7.0 | 13.0 |
| Crude protein | 24.1 | 18.8 | 24.1 | 18.8 | 19.3 | 24.1 | | | | 24.1 | 23.2 | 19.3 |
| Crude fat | 14.1 | 5.9 | 14.1 | 5.9 | 7.1 | 14.1 | | | | 14.1 | 14.3 | 7.1 |
| Crude fiber | 1.1 | 2.0 | 1.1 | 2.0 | 3.0 | 1.1 | | | | 1.1 | 1.0 | 3.0 |
| Crude ash | 5.6 | 4.1 | 5.6 | 4.1 | 1.8 | 5.6 | | | | 5.6 | 6.2 | 1.8 |
| Blending (%) | | | | | | | | | | | | |
| Corn | 39.7 | | 39.7 | | | 39.7 | | 28.1 | | 39.7 | 40.0 | |
| Wheat flour/ bread crumbs | 22.8 | 90.0 | 22.8 | 90.0 | 56.3 | 22.8 | 67.2 | 37.0 | 90 | 22.8 | 22.0 | 56.3 |
| Gluten and starches | | | | | 9.0 | | | | | | | 9.0 |
| Raw meat (chicken or beef) | | | | | 9.0 | | | | | | | 9.0 |
| Animal protein | 19.8 | | 19.8 | | | 19.8 | 21.0 | 19.7 | | 19.8 | 18.0 | |
| Vegetable protein | 3.0 | | 3.0 | | 1.1 | 3.0 | | | | 3.0 | 3.0 | 1.1 |
| Beans | 6.0 | | 6.0 | | | 6.0 | | 4.9 | | 6.0 | 6.0 | |

EP 3 081 096 B1

(continued)

| Blending (%) | | | | | | | | | | | | |
|---|---|---|---|---|---|---|---|---|---|---|---|---|
| Beet pulp | | | | | | | | | | | 2.0 | |
| Animal oils and fats | 6.26 | | 6.26 | | 1.2 | 6.26 | | 6.26 | | 6.26 | 6.3 | 1.2 |
| Humectant | | | | | 13.3 | | | | | | | 13.3 |
| Palatability improver | 1.55 | 9.0 | 1.55 | 9.0 | 3.9 | 1.55 | 10.5 | 2.55 | 9 | 1.55 | 1.55 | 3.9 |
| Additive | 0.9 | 1.0 | 0.9 | 1.0 | 6.2 | 0.9 | 1.34 | 1.5 | 1.00 | 0.9 | 1.2 | 6.2 |

[Table 2]

| | Example 1 | | Example 2 | | | Example 3 | | Example 4 | | Comparative Example 2 | |
|---|---|---|---|---|---|---|---|---|---|---|---|
| | Primary puffed pellets (a) | Auxiliary puffed pellets (b) | Primary puffed pellets (a) | Auxiliary puffed pellets (b) | Square-cut pellets | Primary puffed pellets (a) | Auxiliary puffed pellets (b1) | Primary puffed pellets (a1) | Auxiliary puffed pellets (b) | Primary puffed pellets (a2) | Square-cut pellets |
| Hardness (N) | 49 | 34.3 | 49 | 34.3 | - | 49 | 29.4 | 49 | 34.3 | 36.26 | 61.74 |
| Difference in hardness (N) | 14.7 | | 14.7 | | | 19.6 | | 14.7 | | 25.48 | |
| Thickness (mm) | 4.1 | 6.0 | 4.1 | 6.0 | - | 4.1 | 6.0 | 4.1 | 6.0 | 5.5 | 6.0 |
| Difference in thickness (mm) | 1.9 | | 1.9 | | | 1.9 | | 1.9 | | 0.5 | |

<<Palatability test>> [Palatability test 1]

Ten beagles were prepared and the dog food of Example 1 and the dog food of Comparative Example 1 were put into separate containers and allowed to be freely ingested. Next, the intake amounts were measured by an alias method and the average intake ratio per one dog was acquired. As a result, the average intake ratio of the dog food of Example 1 was 64% and the average intake ratio of the dog food of Comparative Example 1 was 36%.

[Palatability test 2]

Ten beagles were prepared and the dog food of Example 1 and the dog food of Comparative Example 2 were put into separate containers and allowed to be freely ingested. Next, the intake amounts were measured by an alias method and the average intake ratio per one dog was acquired. As a result, the average intake ratio of the dog food of Example 1 was 60% and the average intake ratio of the dog food of Comparative Example 2 was 40%.

[Palatability test 3]

Ten beagles were prepared and the dog food of Example 2 and the dog food of Comparative Example 2 were put into separate containers and allowed to be freely ingested. Next, the intake amounts were measured by an alias method and the average intake ratio per one dog was acquired. As a result, the average intake ratio of the dog food of Example 2 was 60% and the average intake ratio of the dog food of Comparative Example 2 was 40%.

[Palatability test 4]

Twenty beagles were prepared and the dog food of Example 2 and the dog food of Comparative Example 3 were put into separate containers and allowed to be freely ingested. Next, the intake amounts were measured by an alias method and the average intake ratio per one dog was acquired. As a result, the average intake ratio of the dog food of Example 2 was 92% and the average intake ratio of the dog food of Comparative Example 3 was 8%.

[Palatability test 5]

Ten beagles were prepared and the dog food of Example 3 and the dog food of Comparative Example 1 were put into separate containers and allowed to be freely ingested. Next, the intake amounts were measured by an alias method and the average intake ratio per one dog was acquired. As a result, the average intake ratio of the dog food of Example 3 was 70% and the average intake ratio of the dog food of Comparative Example 1 was 30%.

[Palatability test 6]

Twenty beagles were prepared and the dog food of Example 3 and the dog food of Comparative Example 2 were put into separate containers and allowed to be freely ingested. Next, the intake amounts were measured by an alias method and the average intake ratio per one dog was acquired. As a result, the average intake ratio of the dog food of Example 3 was 58% and the average intake ratio of the dog food of Comparative Example 2 was 42%.

[Palatability test 7]

Twenty beagles were prepared and the dog food of Example 1 and the dog food of Example 4 were put into separate containers and allowed to be freely ingested. Next, the intake amounts were measured by an alias method and the average intake ratio per one dog was acquired. As a result, the average intake ratio of the dog food of Example 1 was 33% and the average intake ratio of the dog food of Example 4 was 67%.

From the above-described result, it was confirmed that the pet food of the present invention has excellent palatability for dogs compared to products of the related art and is willingly eaten by dogs.

Industrial Applicability

According to the present invention, it is possible to provide pet food with excellent palatability and can be widely applied to the field of feed for pets. Reference Signs List

P: contact surface in which plunger is brought into contact with pet food

**Claims**

1. Pet food comprising granulated pellets, the pet food comprising:

   primary puffed pellets (A); and
   auxiliary puffed pellets (B),
   wherein a difference in hardness between the primary puffed pellets (A) and the auxiliary puffed pellets (B) being 5 N or more,
   wherein the hardness of the auxiliary puffed pellets (B) is less than the hardness of the primary puffed pellets (A),
   wherein the water contents of the primary puffed pellets (A) and the auxiliary puffed pellets (B) are 10% by weight or less,
   wherein the auxiliary puffed pellets (B) contain 65% by weight or more of at least one member selected from the group consisting of wheat flour and bread crumbs as raw ingredients,
   wherein the primary puffed pellets (A) contains 18% by weight or more of crude protein and 5% by weight to 15% by weight of crude fat, and
   wherein the content of the primary puffed pellets (A) is 70% by weight or more and less than 100% by weight.

2. The pet food according to claim 1, wherein a difference in the thickness between the primary puffed pellets (A) and the auxiliary puffed pellets (B) is 0.5 mm or more.

3. The pet food according to claim 1 or 2, wherein a difference in the water content between the primary puffed pellets (A) and the auxiliary puffed pellets (B) is less than 4.0% by weight.

4. The pet food according to any one of claims 1 to 3, further comprising non-puffed pellets.

5. The pet food according to any one of claims 1 to 4 which is a feed for dogs.

**Patentansprüche**

1. Haustierfutter, das granulierte Pellets umfasst, das Haustierfutter umfassend:

   Hauptpuffpallets (A); und
   Zusatzpuffpallets (B),
   wobei eine Differenz in der Härte zwischen den Hauptpuffpallets (A) und den Zusatzpuffpallets (B) 5 N oder mehr beträgt,
   wobei die Härte der Zusatzpuffpallets (B) geringer als die Härte der Hauptpuffpallets (A) ist,
   wobei der Wassergehalt der Hauptpuffpallets (A) und der Zusatzpuffpallets (B) 10 Gewichtsprozent oder weniger beträgt,
   wobei die Zusatzpuffpallets (A) 65 Gewichtsprozent oder mehr wenigstens eines Elements, das aus der Gruppe, die aus Weizenmehl und Brotkrümeln als Rohstoffe zusammengesetzt ist, ausgewählt wird, enthalten,
   wobei die Hauptpuffpallets (A) 18 Gewichtsprozent oder mehr von Rohprotein und 5 Gewichtsprozent bis 15 Gewichtsprozent von Rohfett enthalten, und
   wobei der Anteil der Hauptpuffpallets (A) 70 Gewichtsprozent oder mehr und weniger als 100 Gewichtsprozent beträgt.

2. Das Haustierfutter gemäß Anspruch 1, wobei eine Differenz der Dicke zwischen den Hauptpuffpallets (A) und den Zusatzpuffpallets (B) 0.5 mm oder mehr beträgt.

3. Das Haustierfutter gemäß Anspruch 1 oder 2, wobei eine Differenz des Wassergehalts zwischen den Hauptpuffpallets (A) und den Zusatzpuffpallets (B) weniger als 4.0 Gewichtsprozent beträgt.

4. Das Haustierfutter gemäß einem der Ansprüche 1 bis 3, ferner umfassend nicht-gepuffte Pallets.

5. Das Haustierfutter gemäß einem der Ansprüche 1 bis 4, das Futter für Hunde ist.

**Revendications**

1. Nourriture pour animaux de compagnie comprenant des granulés comprenant de la nourriture pour animaux de compagnie:

   Palettes tampons principales (A); et
   Palettes tampons supplémentaires (B),
   dans lequel une différence de dureté entre les palettes tampons principale (A) et les palettes tampons supplémentaires (B) est de 5 N ou plus,
   dans lequel la dureté des palettes tampons supplémentaires (B) est inférieure à la dureté de les palettes tampons principale (A),
   dans laquelle la teneur en eau des palettes tampons principale (A) et des palettes tampons supplémentaires (B) est égale ou inférieure à 10% en poids,
   dans lequel les palettes tampons principale (A) contient au moins 65% en poids d'au moins un élément choisi dans le groupe constitué de la farine de blé et de la chapelure en tant que matières premières,
   les palettes tampons principales (A) contenant 18% en poids ou plus de protéines brutes et 5% en poids à 15% en poids de graisse brute, et
   dans lequel la teneur des palettes tampons principale (A) est de 70% en poids ou plus et de moins de 100% en poids.

2. Aliment pour animaux de compagnie selon la revendication 1, **caractérisé en ce que** la différence d'épaisseur entre les palettes principales (A) et les palettes tampons supplémentaires (B) est de 0,5 mm ou plus.

3. Aliment pour animaux de compagnie selon la revendication 1 ou 2, dans lequel une différence de teneur en eau entre les palettes tampons principale (A) et les palettes tampons supplémentaires (B) est inférieure à 4,0% en poids,

4. Aliment pour animaux de compagnie selon l'une quelconque des revendications 1 à 3, comprenant en outre des palettes non soufflées.

5. Aliment pour animaux de compagnie selon l'une quelconque des revendications 1 à 4, qui est un aliment pour chien.

*FIG. 1A*

*FIG. 1B*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013257500 A
- JP H0870787 B
- US 4190679 A
- WO 2013138405 A2
- GB 2060345 A

**Non-patent literature cited in the description**

- Small Animal Clinical Nutrition 4th Edition. Mark Morris Associates, 2000, 157-190
- **SZCZESNIAK, A. S.** *J. Food Sci.,* 1963, vol. 28, 385
- **SZCZESNIAK, A. S. ; BLANDT, M. A. ; FREIDMAN, H. H.** *J. Food Sci.,* 1963, vol. 28, 397